# EUROPEAN PATENT SPECIFICATION

(11) **EP 4 258 591 B1**
(45) Date of publication and mention of the grant of the patent: **09.12.2026**
(21) Application number: 23152899.3
(22) Date of filing: 23.01.2023
(51) Int. Cl.: H04L 9/00, H04L 9/30

(54) **APPARATUS AND METHOD WITH HOMOMORPHIC ENCRYPTION OPERATION**
VORRICHTUNG UND VERFAHREN MIT HOMOMORPHER VERSCHLÜSSELUNGSOPERATION
APPAREIL ET PROCÉDÉ AVEC OPÉRATION DE CHIFFREMENT HOMOMORPHE

(30) Priority: 07.04.2022 KR 20220043521; 16.06.2022 KR 20220073618
(43) Date of publication of application: 11.10.2023
(73) Proprietor: Samsung Electronics Co., Ltd., Suwon-si 16677 (KR); Graz University Of Technology, 8010 Graz (AT)
(72) Inventor: Mert, Ahmet Can, 8010 Graz (AT); Sinha Roy, Sujoy, 8010 Graz (AT); Aikata, 8010 Graz (AT); Kwon, Sunmin, Suwon-si, Gyeonggi-do 16678 (KR); Lee, Yongwoo, Suwon-si, Gyeonggi-do 16678 (KR)
(74) Representative: Grünecker Patent- und Rechtsanwälte PartG mbB

(56) References cited:
- ÖZERK ÖZGÜN ET AL: "Efficient number theoretic transform implementation on GPU for homomorphic encryption", THE JOURNAL OF SUPERCOMPUTING, SPRINGER US, NEW YORK, vol. 78, no. 2, 13 July 2021 (2021-07-13), pages 2840 - 2872, XP037674516, ISSN: 0920-8542, [retrieved on 20210713], DOI: 10.1007/S11227-021-03980-5
- PEDRO GERALDO M R ALVES ET AL: "Performance of Hierarchical Transforms in Homomorphic Encryption: A case study on Logistic Regression inference", vol. 20220131:074527, 26 January 2022 (2022-01-26), pages 1 - 20, XP061070117, Retrieved from the Internet <URL:https://eprint.iacr.org/2022/099.pdf> [retrieved on 20220126]

## Description

### BACKGROUND

### 1. Field

The following description relates to an apparatus and method with a homomorphic encryption operation.

### 2. Description of Related Art

Homomorphic encryption is a promising encryption method that enables arbitrary operations between encrypted data. Homomorphic encryption is used to perform arbitrary operations on encrypted data without decrypting the encrypted data and without losing the ability to recover (by decryption) the underlying cleartext as transformed by the arbitrary operations. In addition, homomorphic encryption is lattice-based and resistant to quantum algorithms and is thus considered to be secure.

The parameters of such lattice-based homomorphic encryption include a polynomial degree N and a coefficient modulus q corresponding to a ciphertext. These parameters may be varied and may set or determined based on a target bit security and a multiplicative depth. Therefore, to provide a flexible accelerator, i.e., one applicable to various applications, it may be helpful to support various polynomial degrees and moduli.

The polynomial degree N can be an important parameter of homomorphic encryption. For example, CKKS (Cheon, Kim, Kim and Song), BGV (Brakerski, Gentry, and Vaikuntanathan), and BFV (Brakerski, Fan, and Vercauteren) use a large parameter, for example, N ≥ 2^14, and FHEW (Fastest Homomorphic Encryption in the West) and TFHE (Fast Fully Homomorphic Encryption over the Torus) use a small parameter, for example, N < 2^11.

As the parameter N increases, the number of multiplications (or a multiplication level, herein) and the amount of data used by a homomorphic encryption scheme may increase, however hardware accelerators have limited resources.

Özerk Özgün et al: "Efficient number theoretic transform implementation on GPU for homomorphic encryption", The Journal Of Supercomputing, Springer US, New York, vol. 78, no. 2, 13 July 2021, pages 2840-2872, XP037674516, ISSN: 0920-8542, DOI: 10.1007/ S11227-021 -03980-5 [retrieved on 2021 -07-13] discloses an efficient and fast, high performance implementation of number theoretic transform (NTT), inverse NTT (INTT) and NTT-based polynomial multiplication operations for GPU platforms. The GPU implementations proposed in Özerk Özgün et al support polynomials of degrees ranging from 2048 to 32768 with 30-bit and 61-bit coefficients. Further, in Özerk Özgün et al, the NTT and INTT algorithms have been significantly modified for efficient thread usage on GPU and a single-kernel and a multi-kernel approach, which perform relatively better on small and large degree polynomials, respectively, have been implemented. This single- and multi-kernel approach have been combined into a novel hybrid design, which first employs the multi-kernel approach and then switches to the single-kernel approach, as soon as the NTT/INTT block becomes sufficiently small. This hybrid approach achieves up to 9x speed up for different polynomial degrees compared to the multi-kernel approach.

Pedro Geraldo M R Alves et al: "Performance of Hierarchical Transforms in Homomorphic Encryption: A case study on Logistic Regression inference", IACR, International Association For Cryptologic Research, vol. 20220131:074527 26 January 2022, pages 1-20, XP061070117, Retrieved from the Internet: URL:https:// eprint.iacr.org/2022/099.pdf [retrieved on 2022-01-26] studies the possible advantages of replacing the NTT with the discrete Galois transform (DGT) for the implementation of polynomial multiplication in fully homomorphic encryption cryptosystems. In particular, Pedro Geraldo M R Alves et al investigates whether DGT is more suitable than NTT for GPUs and memory-bounded platforms. The results of Pedro Geraldo M R Alves et al show that the NTT offers a clear performance advantage over the DGT in most cases and especially in smaller instances. For 8192-degree polynomial rings, however, the DGT more efficiently takes advantage of the processing hardware and can overcome NTT. In this context, Pedro Geraldo M R Alves et al mentions that the implementation of the DGT or NTT in memory-constrained devices, such as GPUs, is not straightforward and proposes to adopt a hierarchical strategy to reduce the size of the transforms to a feasible dimension, which can be easily supported by the processing hardware. Under section 2.4, Pedro Geraldo M R Alves et al discloses the idea of splitting the input polynomial, of degree N, into smaller instances as close as to √N. Further, under item 3.1 of Pedro Geraldo M R Alves et al, it is mentioned that following this hierachical strategy, N-degree polynomials are processed as Nᵣ or N_{C} degree, such that N = Nᵣ * N_{C}.

It is the object of the present invention to provide systems and methods for efficiently performing a homomorphic operation on a ciphertext having a high-degree polynomial.

This object is solved by the subject matter of the independent claims.

Preferred embodiments are defined in the dependent claims.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is claimed in the independent claims. Preferred embodiments are specified in the dependent claims.

In one general aspect, an apparatus includes a processor configured to, and/or coupled with a memory storing instructions to configure the processor to: generate, from a ciphertext corresponding to a polynomial having a first degree for performing a homomorphic encryption operation, split polynomials having a second degree by factorizing the polynomial, wherein the split polynomials have a second degree that is less than the first degree, generate partial operation results by performing an element-wise operation using the split polynomials, and generate a homomorphic encryption operation result corresponding to the ciphertext by joining the partial operation results.

A coefficient modulus of the split polynomials may have a 4N-th root of unity, and N may correspond to the second degree.

The processor may be further configured to, and/or the instructions may be to further configure the processor to allocate, to a first operator, a first polynomial among the split polynomials, and allocate, to a second operator, a second polynomial among the split polynomials.

The processor may be further configured to, and/or the instructions may be to further configure the processor to generate the split polynomials by recursively splitting the polynomial based on a threshold degree of a polynomial operable by the first operator and the second operator.

The processor may be further configured to, and/or the instructions may be to further configure the processor to recursively split the polynomial until a degree of the split polynomials becomes smaller than the threshold degree.

The processor may be further configured to, and/or the instructions may be to further configure the processor to determine a second twiddle factor corresponding to a second polynomial among the split polynomials based on a first twiddle factor corresponding to a first polynomial among the split polynomials.

The processor may be further configured to, and/or the instructions may be to further configure the processor to determine the second twiddle factor by multiplying the first twiddle factor by a constant.

The processor may be further configured to, and/or the instructions may be to further configure the processor to perform a number-theoretic transformation (NTT) on the first polynomial and the second polynomial based on the first twiddle factor and the second twiddle factor.

The processor may be further configured to, and/or the instructions may be to further configure the processor to join the partial operation results by adding or subtracting a coefficient of a first polynomial among the split polynomials and a coefficient of a second polynomial among the split polynomials.

In one general aspect, a method is performed by a computing apparatus and includes generating a plurality of split polynomials having a second degree by factorizing a polynomial having a first degree, the polynomial is a ciphertext having a first degree and is for performing a homomorphic encryption operation, generating partial operation results by performing an element-wise operation using the split polynomials, and generating a homomorphic encryption operation result corresponding to the ciphertext by joining the partial operation results.

A coefficient modulus of the split polynomials may have a 4N-th root of unity, and N may correspond to the second degree.

The generating of the partial operation results may include allocating, to a first operator, a first polynomial among the split polynomials, and allocating, to a second operator, a second polynomial among the split polynomials.

The generating of the split polynomials may include generating the split polynomials by recursively splitting the polynomial based on a threshold degree of a polynomial operable by the first operator and the second operator.

The generating of the split polynomials by recursively splitting the polynomial may include recursively splitting the polynomial until a degree of the split polynomials becomes smaller than the threshold degree.

The determining of the second twiddle factor may include determining the second twiddle factor by multiplying the first twiddle factor by a constant.

The generating of the homomorphic encryption operation result may include joining the partial operation results by adding or subtracting a coefficient of a first polynomial among the split polynomials and a coefficient of a second polynomial among the split polynomials.

In one general aspect, a method is performed by a processor, the method includes performing a homomorphic polynomial operation on an input first-degree polynomial representation conforming to a homomorphic encryption scheme by splitting the input first-degree polynomial representation to a first second-degree polynomial representation and a second second-degree polynomial representation, the second-degree is less than the first degree, and generating an output first-degree polynomial representation by combining a result of performing a homomorphic polynomial operation on the first second-degree polynomial representation with a result of performing the homomorphic polynomial operation on the second second-degree polynomial representation.

The output first-degree polynomial may be equivalent to performing the homomorphic polynomial operation on the input first-degree polynomial representation.

The processor may include residue polynomial arithmetic units (RPAUs) that perform the homomorphic polynomial operations.

The splitting the input first-degree polynomial representation may include factorizing the input first-degree polynomial, and the polynomial representations may each comprise respective vectors of numbers in memory of the processor while being operated on by the processor.

The processor may be configured to perform the homomorphic polynomial operation for polynomial representations of polynomials of at most N degrees, wherein the first-degree may be greater than N, wherein the second-degree may be equal to N, and wherein the factorizing may be based on N.

Other features and aspects will be apparent from the following detailed description, the drawings, and the claims.

### BRIEF DESCRIPTION OF THE DRAWINGS

FIG. 1 illustrates an example of a homomorphic encryption operation apparatus, according to one or more embodiments.
FIG. 2 illustrates an example of an operation of the homomorphic encryption operation apparatus of FIG. 1, according to one or more embodiments.
FIG. 3 illustrates another example of an operation of the homomorphic encryption operation apparatus of FIG. 1, according to one or more embodiments.
FIG. 4 illustrates an example of a coefficient modulus, according to one or more embodiments.
FIG. 5 illustrates an example of determining a twiddle factor, according to one or more embodiments.
FIG. 6 illustrates an example of a polynomial split structure, according to one or more embodiments.
FIG. 7 illustrates an example of a polynomial join structure, according to one or more embodiments.
FIG. 8 illustrates an example of scheduling a homomorphic multiplication operation, according to one or more embodiments.
FIG. 9 illustrates an example of scheduling a key switching operation, according to one or more embodiments.
FIG. 10 illustrates an example of calculating split polynomials using a plurality of operators, according to one or more embodiments.
FIG. 11 is a flowchart illustrating an example of a homomorphic encryption operation method performed by the homomorphic encryption operation apparatus of FIG. 1, according to one or more embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

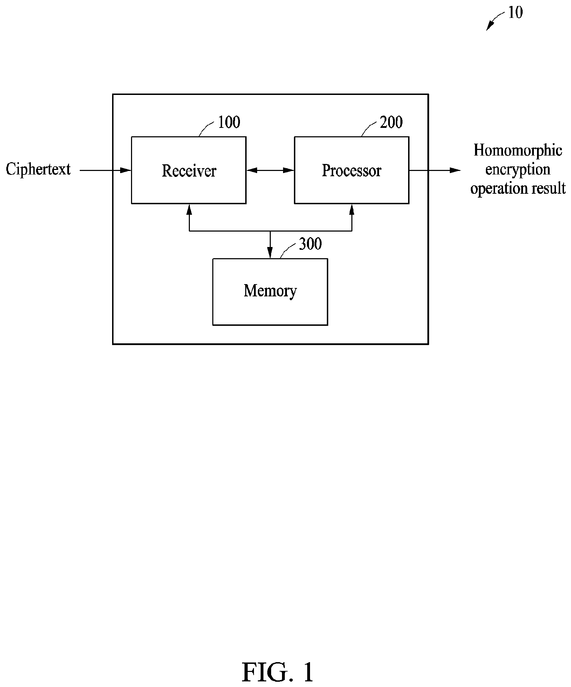

FIG. 1 illustrates an example of a homomorphic encryption operation apparatus, according to one or more embodiments. The homomorphic encryption operation apparatus described herein may refer to an apparatus for performing a homomorphic encryption operation.

Referring to FIG. 1, a homomorphic encryption operation apparatus 10 may perform encryption and decryption using a homomorphic encryption scheme. The homomorphic encryption operation apparatus 10 may additionally, or alternatively, perform a homomorphic encryption operation of the homomorphic encryption scheme, but not necessarily encryption or decryption per se. The homomorphic encryption operation may include a polynomial operation corresponding to a ciphertext.

The homomorphic encryption operation apparatus 10 may generate a homomorphic encryption operation result by performing the homomorphic encryption operation.

Homomorphic encryption is a type of encryption scheme that allows various operations (generally, polynomial operations) to be performed on homomorphically encrypted data which is, generally, in the form of a representation of a polynomial, e.g., numbers in memory correspond to coefficients of a polynomial. In a homomorphic encryption scheme, a result of an operation on a homomorphically encrypted ciphertext (encrypted from a plaintext) may become a new ciphertext (e.g., a transformation of the ciphertext), and nonetheless, the plaintext obtained by decrypting the transformed ciphertext may be the same as a result of performing the operation on the unencrypted original data (plaintext). That is, the original plaintext, as transformed by the operation, can be recovered/reconstructed by homomorphically decrypting the transformed ciphertext. A ciphertext may be repeatedly transformed by a sequence of homomorphic encryption operations and still be decryptable back to a form of the original plaintext that will be the same as if the sequence of homomorphic encryption operations had been performed on the original plaintext. In other words, ciphertext can be generally manipulated and a subsequent decryption of the manipulated ciphertext may be equivalent to a result of performing the general manipulation on the original plaintext.

As used herein, "homomorphic encryption operation" refers to both an original encryption operation (an operation of encrypting a plaintext into a ciphertext) as well as any operation, usually a specific set of polynomial operations, that homomorphically transforms the ciphertext, i.e., preserves the ability to decrypt the operation-transformed ciphertext to a form equivalent to having applied the operation to the plaintext. In other words, "homomorphic encryption operation" does not necessarily refer only to encryption per se, but, depending on the context, may refer to homomorphic operations on already-encrypted ciphertext.

Hereinafter, encrypted data, an encrypted text, and a ciphertext will refer to the same object, of which, the ciphertext will be mainly used. The ciphertext may be in the form of a polynomial representation or a vector including a polynomial representation (as used herein "polynomial representation" refers to an encoding of a polynomial in a computer memory).

The homomorphic encryption operation apparatus 10 may perform a ring learning with errors (RLWE) problem-based homomorphic encryption operation that supports an operation on a ciphertext into which a plaintext of integers has been encrypted. For example, the homomorphic encryption operation apparatus 10 may perform an RLWE problem-based approximate homomorphic encryption operation that supports an operation on a ciphertext into which a plaintext of real numbers and/or complex numbers has been encrypted (which itself may be an encoding of a general message of any type, e.g., text).

The homomorphic encryption operation apparatus 10 may derive the same result as one obtained from an operation performed on data of a plaintext by decrypting a result obtained from an operation on the data in an encrypted state, using homomorphic encryption.

The homomorphic encryption operation apparatus 10 may be implemented in the form of a chip and may be provided in a hardware accelerator using or implementing homomorphic encryption. The homomorphic encryption operation apparatus 10 may be implemented in the form of a chip or software (e.g., instructions or code) to reduce memory usage of various operation apparatuses or devices. The homomorphic encryption operation apparatus 10 may reduce a computational amount used to perform homomorphic encryption operations and may thereby reduce a total computational amount of a server, for example.

The homomorphic encryption operation apparatus 10 may be implemented in, as non-limiting examples, a personal computer (PC), a data server, or a portable device. A portable device may be, for example, a laptop computer, a mobile phone, a smartphone, a tablet PC, a mobile Internet device (MID), a personal digital assistant (PDA), an enterprise digital assistant (EDA), a digital still camera, a digital video camera, a portable multimedia player (PMP), a personal navigation device or portable navigation device (PND), a handheld game console, an e-book, or a smart device. A smart device may include, for example, a smart watch, a smart band, or a smart ring.

The homomorphic encryption operation apparatus 10 may include a receiver 100 and a processor 200. The homomorphic encryption operation apparatus 10 may further include a memory 300. The receiver may be, for example, a port of an on-chip component (e.g., a core), a bus interface, a controller, a network interface card, or the like.

The receiver 100 may receive a ciphertext in the form of a polynomial representation. The receiver 100 may output the ciphertext to the processor 200. The polynomial representation may have a degree (or an order). For example, a degree of a polynomial (or simply a "polynomial degree" or "degree" herein) may be denoted as N, and N may be a natural number. The degree or order of the polynomial, in a context of splitting thereof, may also be referred to as a first/second degree (to distinguish between the degrees of polynomials involved in polynomial splitting). The order or degree of a polynomial representation may be explicit, e.g., a number in memory, or it may be provided by convention, e.g., a feature of the structure, format, and/or size of the polynomial representation may indicate N. Typically, a polynomial representation may be a vector of numbers, where each number/element represents a polynomial coefficient of a corresponding term of the polynomial, and the index (position) of a number in the vector represents the order of the term whose coefficient is stored in that vector position. Generally, the "order"/"degree" of a polynomial refers to the highest order/degree of any of its terms. Where describing operations of a processor/apparatus such as the homomorphic encryption operation apparatus 10, the term "polynomial" as used herein refers to a "polynomial representation", which is data stored in memory or in the internal circuitry of a processor/apparatus (e.g., in registers, a cache, a residue polynomial arithmetic unit (RPAU), etc.).

The processor 200 may process data stored in the memory 300. The processor 200 may execute computer-readable code (e.g., software in the form of code/instructions) stored in the memory 300 and instructions triggered/executed by the processor 200.

The processor 200 may be a hardware-implemented data processing device including a physically structured circuit to perform desired operations. The desired operations may include, for example, code or instructions included in a program.

The hardware-implemented data processing device may include, for example, a microprocessor, a central processing unit (CPU), a processor core, a multi-core processor, a multiprocessor, an application-specific integrated circuit (ASIC), and a field-programmable gate array (FPGA), a quantum processor, combinations thereof, or the like.

The processor 200 may include an operator. The operator may include a first operator and a second operator. The operator may include an accelerator. The accelerator may include, for example, a graphics processing unit (GPU), an FPGA, an ASIC, or an application processor (AP). Alternatively, the accelerator may be implemented as a software computing environment, such as, for example, a virtual machine.

The processor 200 may generate split polynomials having a second degree by factorizing the received polynomial (having the first degree); the second degree being less than the first degree.

The processor 200 may allocate, to the first operator, a first ciphertext corresponding to a first polynomial among the split polynomials. The processor 200 may allocate, to the second operator, a second ciphertext corresponding to a second polynomial among the split polynomials.

The processor 200 may generate the split polynomials by recursively splitting the polynomial based on a threshold degree of a polynomial operable by the first operator and the second operator (i.e., a maximum degree of polynomial that the operators are statically or dynamically configured to operate on). The processor 200 may continue recursively splitting the polynomial(s) until a degree of the split polynomials becomes smaller than the threshold degree. Here, recursive splitting refers to splitting an initial/received polynomial into next polynomials, splitting the next polynomials into next-next polynomials, etc.

The processor 200 may determine a second twiddle factor corresponding to a second polynomial (among the split polynomials) based on a first twiddle factor corresponding to a first polynomial (among the split polynomials).

The processor 200 may determine the second twiddle factor by multiplying the first twiddle factor by a constant.

The processor 200 may perform a number-theoretic transformation (NTT) on the first polynomial and the second polynomial based on the first twiddle factor and the second twiddle factor.

A coefficient modulus of the split polynomials may have a 4N-th root of unity, in which N may correspond to the second degree (the degree of the split polynomials).

The processor 200 may generate partial operation results by performing an element-wise operation using the split polynomials. The element-wise operation may include homomorphic multiplication, homomorphic addition, and homomorphic subtraction operations (examples of homomorphic encryption operations).

The processor 200 may generate the homomorphic encryption operation result corresponding to the original/received ciphertext/polynomial by joining the partial operation results. The processor 200 may join the partial operation results by adding or subtracting a coefficient of a first polynomial (among the split polynomials) and a coefficient of a second polynomial (among the split polynomials).

The memory 300 may store therein instructions (or programs) executable by the processor 200. The instructions may include, for example, an instruction for performing an operation of the processor 200 and/or an instruction for performing an operation of each element of the processor 200.

The memory 300 may be implemented as a volatile memory device and/or a non-volatile memory device (the memory 300 is not a signal per se).

The volatile memory device may be implemented, for example, as a dynamic random-access memory (DRAM), a static random-access memory (SRAM), a thyristor RAM (T-RAM), a zero capacitor RAM (Z-RAM), or a twin transistor RAM (TTRAM).

The non-volatile memory device may be implemented, for example, as an electrically erasable programmable read-only memory (EEPROM), a flash memory, a magnetic RAM (MRAM), a spin-transfer torque-MRAM (STT-MRAM), a conductive bridging RAM (CBRAM), a ferroelectric RAM (FeRAM), a phase change RAM (PRAM), a resistive RAM (RRAM), a nanotube RRAM, a polymer RAM (PoRAM), a nano-floating gate memory (NFGM), a holographic memory, a molecular electronic memory device, or an insulator resistance change memory.

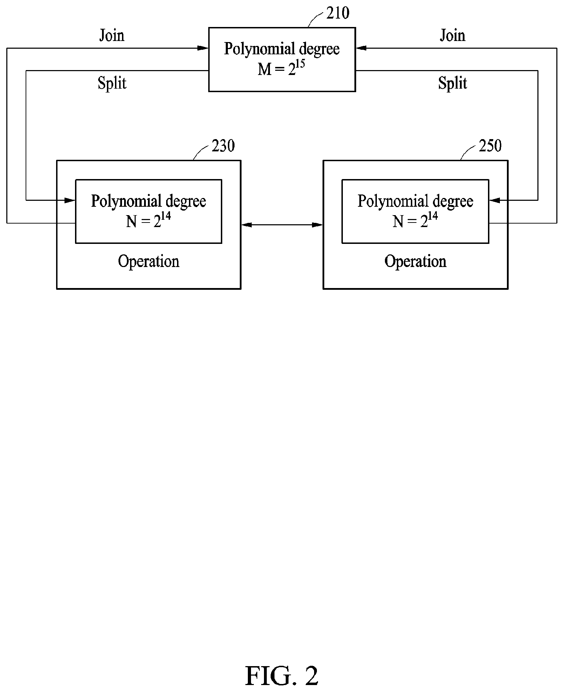

FIG. 2 illustrates an example of an operation of the homomorphic encryption operation apparatus of FIG. 1, according to one or more embodiments.

Referring to FIG. 2, processing a polynomial to perform a homomorphic encryption operation corresponding to a polynomial of degree N, an operation on the order of O(N^2) or O(NlogN), and an operator performing such operation, may require significant storage space (or memory space) .

For example, if a polynomial in homomorphic encryption has degree N of 2^14 (i.e., N=2^14), 2^15 (i.e., N=2^15), or 2^16 (i.e., N=2^16), a considerably large amount of memory and computation (or operations) may be required for a homomorphic encryption operation thereon. When such parameters (e.g., N) for performing a homomorphic encryption operation are determined (or known), it may be possible to determine (e.g., select or control) an operator and an accelerator capable of processing the homomorphic encryption operation.

A processor (e.g., the processor 200 of FIG. 1) may be configured to be able to process a high-degree polynomial using an operator capable of processing only a low-degree polynomial. For example, the processor 200 may process a polynomial having a degree of 2^15 (i.e., N=2^15) using an operator supporting a polynomial degree N=2^14.

For example, the processor 200 may process a high-degree polynomial by first splitting the high-degree polynomial into a low-degree polynomial and then processing the low-degree polynomial using hardware configured to process the low-degree polynomial (here, "high" and "low" only indicate that one polynomial has a larger degree than the other). For example, as illustrated in FIG. 2, the processor 200 may generate second polynomials 230 and 250 having degree N=2^14 by splitting a first polynomial 210 having a degree of 2^15. The processor 200 may calculate an operation result for an operation on the first polynomial 210 by first performing the operation on each of the second polynomials 230 and 250, and then joining respective results of the operation on the second polynomials 230 and 250. As noted above, splitting may be performed recursively to accommodate higher-degree polynomials, e.g., in the example above, N might be 2^16.

That is, the processor 200 may efficiently perform a homomorphic operation on a ciphertext having a high-degree polynomial by using an operator capable of processing a low-degree polynomial (e.g., the processor 200 is not configured to directly perform the operation on polynomials of a high degree such as N=2^15). The processor 200 may reduce memory usage and computational amount through polynomial splitting and joining, and thereby efficiently use hardware designed for a lower (or smaller) degree polynomial.

For example, consider a case where Z is a 4N-th root of unity. When F(X) = X^2N +1 is given as a reduction polynomial (a polynomial to be reduced), then Z^2N = -1. In this case, F(X) = X^2N + 1 = X^2N - Z^2N, and the processor 200 may factorize the polynomial F(X) into (X^N - Z^N) and (X^N + Z^N). That is, the processor 200 may factorize F(X) as F(X)= X^2N + 1 = X^2N - Z^2N = (X^N - Z^N)*(X^N + Z^N).

Through the foregoing process, the processor 200 may split a polynomial having a degree of 2N into two polynomials each having a degree of N. The processor 200 may split the polynomial into polynomials having a degree smaller than N by recursively performing the factorization described above.

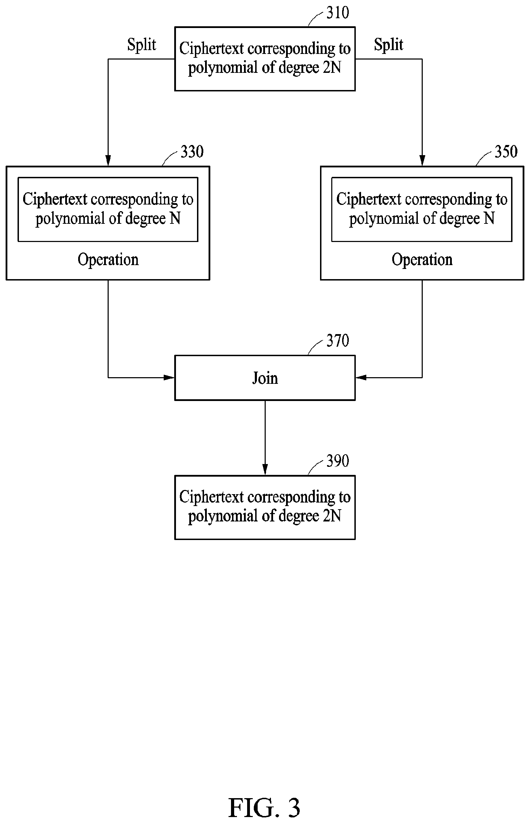

FIG. 3 illustrates another example of an operation of the homomorphic encryption operation apparatus of FIG. 1, according to one or more embodiments.

Referring to FIG. 3, in step 310 a processor (e.g., the processor 200 of FIG. 1) may receive a ciphertext in the form of a polynomial having a degree of 2N. Step 310 may further involve the processor 200 splitting the polynomial of degree 2N into two respective polynomials of degree N. In steps 330 and 350 the processor may apply an operation to the respective degree-N polynomials (concurrently or in parallel) to generate ciphertexts respectively corresponding to the polynomials of degree of N. That is, step 330 receives a first degree-N polynomial split from the degree-2N polynomial, performs a polynomial operation thereon (e.g., transforming the first degree-N polynomial), and outputs a first-transformed degree-N polynomial (a first ciphertext). Similarly, step 350 receives a second degree-N polynomial split from the degree-2N polynomial, performs the same polynomial operation thereon (e.g., transforming the second degree-N polynomial in the same way the first degree-N polynomial was transformed), and outputs a second-transformed degree-N polynomial (a second ciphertext).

The processor 200 may join the first and second ciphertexts respectively corresponding to the polynomials of the degree N in step 370. The processor 200 may produce the equivalent of performing the polynomial operation of step 330 and 350 on the degree 2N polynomial, i.e., reconstructing the ciphertext corresponding to the polynomial of the degree 2N, through joining in step 390.

For example, in a case where Z is a 4N-th root of unity, when F(X)= X^2N +1 is given as a reduction polynomial, then Z^2N = -1. In this example, F(X) = X^2N + 1 = X^2N - Z^2N, and the processor 200 may factorize F(X) into two polynomials (X^N - Z^N) and (X^N + Z^N).

The processor 200 may perform the factorization as F(X) = X^2N + 1 = X^2N - Z^2N = (X^N - Z^N)*(X^N + Z^N). As described above, the processor 200 may split a polynomial having a degree of 2N into two polynomials each having a degree of N. Referring to the example above, for illustration, if a split polynomial has a degree of N = 2^14, then the original polynomial has degree of 2N = 2(2^14) = 2^15. The processor 200 may split the polynomial into polynomials having a smaller degree (by more than one) by recursively performing the foregoing splitting process of splitting a polynomial into two. In other words, splitting may be done recursively until the resulting set of reduced-degree polynomials have a suitable degree, operations may then be performed on the reduced-degree polynomials, and those results may be joined to provide the outcome (ciphertext) of applying the operation to the initial unsplit polynomial (the initial ciphertext).

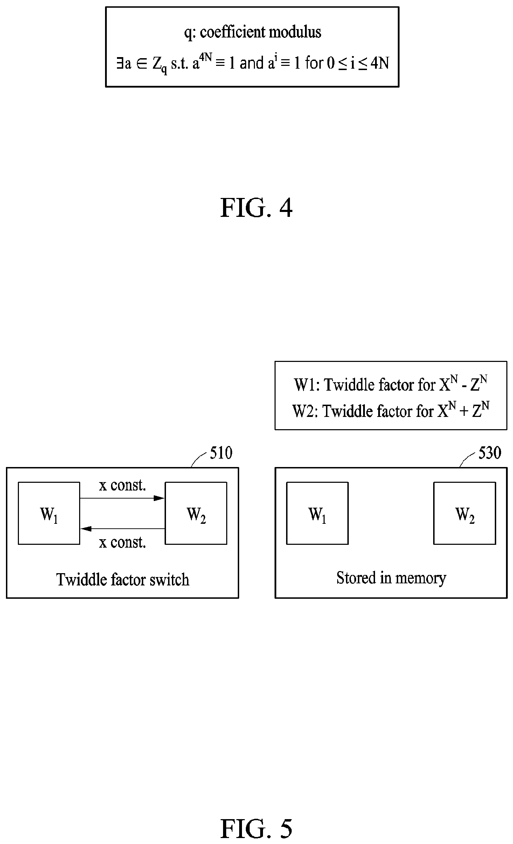

FIG. 4 illustrates an example of a coefficient modulus 400, according to one or more embodiments.

Referring to FIG. 4, for a processor (e.g., the processor 200 of FIG. 1) to split a polynomial, a coefficient modulus of the polynomial may need to satisfy a specific condition. For example, the coefficient modulus of the polynomial to be split may need to satisfy the condition that the coefficient modulus has a 4N-th root of unity.

Consequently, the processor 200 may be further configured to select an appropriate coefficient modulus to perform an operation on a higher-degree polynomial. For example, the processor 200 may be configured to select a coefficient modulus that satisfies the example illustrated in FIG. 4.

FIG. 5 illustrates an example of determining a twiddle factor, according to one or more embodiments.

Referring to FIG. 5, a processor (e.g., the processor 200 of FIG. 1) may determine a second twiddle factor corresponding to a second polynomial among a plurality of split polynomials, and the second twiddle factor may be determined based on a first twiddle factor corresponding to a first polynomial among the split polynomials.

The processor 200 may determine the second twiddle factor by multiplying the first twiddle factor by a constant.

The processor 200 may perform an NTT on the first polynomial and the second polynomial based on the first twiddle factor and the second twiddle factor.

Hereinafter, an example of determining a twiddle factor will be described under the assumption that a polynomial is split into two. However, according to alternative examples, the number of split polynomials may be greater than two. In this case, the processor 200 may use one twiddle factor to determine twiddle factors corresponding to such additional polynomials.

In this example, the twiddle factors for the two polynomials (e.g., X^N-Z^N, X^N+Z^N) obtained by splitting X^2N-1 may be different. Therefore, configuring hardware to support an operation for both polynomials may involve a hardware structure supporting different twiddle factors.

In the example of FIG. 5, W1 denotes a first twiddle factor, and W2 denotes a second twiddle factor.

The processor 200 may determine a twiddle factor in two ways. First, in step 510, the processor 200 may use a twiddle factor X^N-Z^N of one polynomial to derive therefrom, and use, a twiddle factor X^N+Z^N of another polynomial. The processor 200 may improve an operation speed by using a relationship of a constant product between the twiddle factor of the polynomial X^N-Z^N and the twiddle factor of the other polynomial X^N+Z^N (one may be a multiple of the other).

Second, the processor 200 may store the respective twiddle factors X^N-Z^N and X^N+Z^N of the two polynomials in a memory (e.g., the memory 300 of FIG. 1) and use them for an operation in step 530.

By determining a plurality of twiddle factors as described above, the processor 200 may support an NTT operation for two or more polynomials.

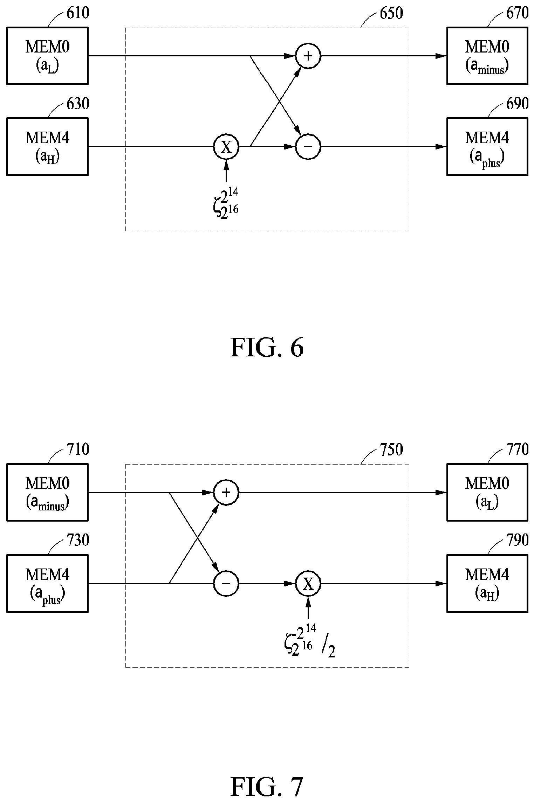

FIG. 6 illustrates an example of a polynomial split structure, and FIG. 7 illustrates an example of a polynomial join structure, according to one or more embodiments.

Referring to FIGS. 6 and 7, a processor (e.g., the processor 200 of FIG. 1) may split a polynomial having a larger degree into polynomials each having a smaller degree. The processor 200 may join the split polynomials each having the smaller degree into the polynomial having the larger degree.

The processor 200 may split a high-degree polynomial into low-degree polynomials using by performing logic (e.g., circuitry and/or instructions) that can be described by Equations 1 and 2 below.${a}_{p} \left(x\right) = {\sum }_{i = 0}^{N - 1} \left({a}_{i}+{a}_{N + i}⋅{Z}^{N}\right) ⋅ {x}^{i}$ Equation 1 ${a}_{m} \left(x\right) = {\sum }_{i = 0}^{N - 1} \left({a}_{i}-{a}_{N + i}⋅{Z}^{N}\right) ⋅ {x}^{i}$ Equation 2

In the equations above, if a(X) is a 2N-degree polynomial, aₚ(X) and aₘ(X) indicate split N-degree polynomials. aₚ(X) and aₘ(X) may be referred to as a plus (p) coefficient and a minus (m) coefficient, respectively. In addition, aᵢ denotes an i-th coefficient of a(X). The processor 200 may generate aₚ(X) and aₘ(X) from a(X) using logic/instructions/circuitry corresponding to Equations 1 and 2 above.

The processor 200 may reconstruct a high-degree polynomial from split polynomials by using Equation 3.$a \left(x\right) = \left\{\begin{matrix}\left({a}_{p , i}+{a}_{m , i}\right) ⋅ \frac{1}{2} ⋅ {x}^{i} & if i < N \\ \left({a}_{p , i}-{a}_{m , i}\right) ⋅ \frac{{Z}^{- N}}{2} ⋅ {x}^{i} & otherwise\end{matrix}\right.$ Equation 3

The processor 200 may reconstruct a(X) from aₚ(X) and aₘ(X) using Equation 3 above.

The processor 200 may perform split and join operations using the Cooley-Tukey algorithm and the Gentleman-Sande butterfly.

For example, the processor 200 may calculate a+b*w and a-b*w for a, b, and w given as in Equations 1 and 2 by applying the Cooley-Tukey algorithm. The processor 200 may calculate (a+b)*(1/2) (mod q) and (a-b)*(w/2) (mod q) for a, b, and w given as in Equation 3 by applying the Gentleman-Sande butterfly.

Equations 1-3 are convenient descriptions of combinations of logic operations performed by a physical processor. An ordinary engineer may readily implement Equations 1 -3 with appropriate circuit-design software, source code, or other tools.

In the example of FIG. 6, the processor 200 may input coefficients 610 and 630 of a polynomial stored in a memory (e.g., the memory 300 of FIG. 1) to a splitter 650 and perform addition, subtraction, and/or multiplication to calculate coefficients 670 and 690 of lower-degree split polynomials.

In the example of FIG. 7, the processor 200 may input coefficients 710 and 730 of split polynomials stored in a memory (e.g., the memory 300 of FIG. 1) to a joiner 750 and perform addition, subtraction, and/or multiplication to reconstruct coefficients 770 and 790 of a higher-degree polynomial.

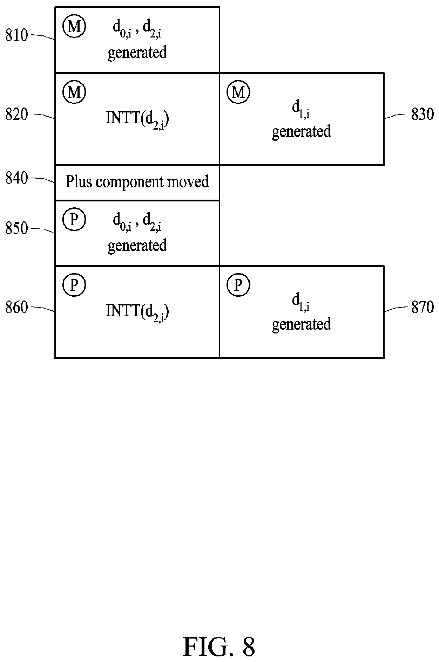

FIG. 8 illustrates an example of scheduling a homomorphic multiplication operation, according to one or more embodiments.

Referring to FIG. 8, a processor (e.g., the processor 200 of FIG. 1) may perform, for example, a homomorphic multiplication operation (among other possible homomorphic encryption operations) through polynomial splitting and joining.

The processor 200 may carry out homomorphic addition and/or homomorphic multiplication operations, for example, for a ciphertext of a 2N-degree polynomial by performing such operations on two split N-degree polynomials obtained as described above. The two split polynomials may be referred to as a plus component and a minus component in sequential order (represented as a circled "P" and a circled "M" in FIG. 8).

The processor 200 may store all plus and minus components in an on-chip memory and perform a homomorphic operation on all minus components. The processor 200 may move a plus component to an appropriate location in the memory and then perform an operation on the plus component.

The processor 200 may perform the operation twice as often compared to homomorphic multiplication (e.g., for N=2^14) by performing a multiplication operation on each of the plus component and the minus component. In this case, on-chip data transmission may be processed rapidly.

The plus component may include a plus coefficient, and the minus component may include a minus coefficient. The processor 200 may perform operations 810 through 830 on a minus coefficient among the split polynomials, and may perform an operation on a plus coefficient. The minus coefficient and the plus coefficient may be the same as described with reference to Equations 1 and 2 above.

The processor 200 may generate d_{0,i} and d_{2,i} in step 810. The processor 200 may perform an inverse NTT (INTT) on d_{2,i} in step 820. The processor 200 may generate d_{1,i} in step 830.

The processor 200 may move the plus component in step 840. The processor 200 may generate d_{0,i} and d_{2,i} for the plus coefficient in step 850. The processor 200 may perform INTT on d_{2,i} in step 860. The processor 200 may generate d_{1,i} in step 870.

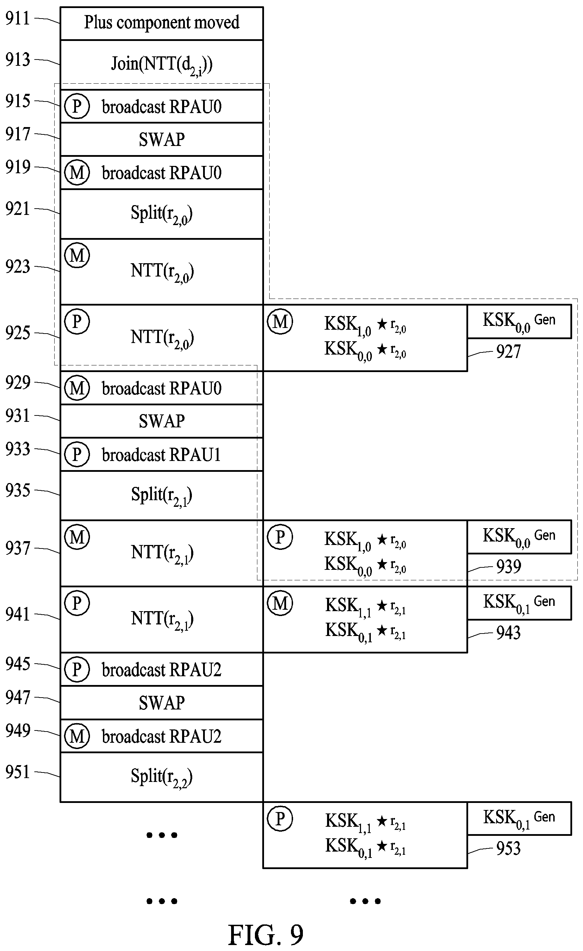

FIG. 9 illustrates an example of scheduling a key switching operation, according to one or more embodiments.

Referring to FIG. 9, a processor (e.g., the processor 200 of FIG. 1) may perform a key switching operation (e.g., among possible homomorphic encryption operations) through polynomial splitting and joining.

The processor 200 may perform a re-linearization operation after a multiplication operation. The processor 200 may perform a transformation on a modulus (e.g., modular reduction); this operation may also be referred to as broadcasting. The processor 200 may perform split and join operations for broadcasting.

Such a broadcasting operation may require both plus and minus components. In addition, re-linearization may require a relatively large memory space to store key switching values.

The processor 200 may secure a memory space for re-linearization. The processor 200 may move some data to the on-chip memory after the multiplication. The processor 200 may move, to the on-chip memory, values that are not necessary for key switching and modular reduction, but which may be necessary values after the key switching and modular reduction operations are completed.

The processor 200 may move the plus component in step 911. The processor 200 may perform joining on an NTT result in step 913. The processor 200 may perform broadcasting on the plus component in step 915. The processor 200 may perform swapping in step 917.

The processor 200 may perform broadcasting on the minus component in step 919. The processor 200 may perform splitting. The processor 200 may perform an NTT operation on the minus component in step 923. The processor 200 may perform an NTT operation on the plus component in step 925. The processor 200 may perform key switching on the minus component based on a result of the NTT operation in step 927.

The processor 200 may perform broadcasting on the minus component in step 929. The processor 200 may perform swapping in step 931. The processor 200 may perform broadcasting on the plus component in step 933. The processor 200 may perform splitting in step 935.

The processor 200 may perform an NTT operation on the minus component in step 937. The processor 200 may perform key switching on the plus component in step 939. The processor 200 may perform an NTT operation on the plus component in step 941. The processor 200 may perform key switching on the minus component in step 943.

The processor 200 may perform broadcasting on the plus component in step 945. The processor 200 may perform swapping in step 947. The processor 200 may perform broadcasting on the minus component in step 949. The processor 200 may perform splitting in step 951. The processor 200 may perform key switching on the plus component in step 953.

The processor 200 may perform key switching by continuously performing the foregoing steps. Some aspects of scheduling may be significant because there may be some cases where only data in some areas of memory is broadcasted to other units. For example, there may be cases where certain hardware allows only data in some area of the memory (e.g., Memory Location 4) to be broadcasted to another unit (e.g., a residue polynomial arithmetic unit (RPAU)).

After joining the plus component and the minus component, the processor 200 may broadcast a joined polynomial of degree 2^15 to another RPAU. After broadcasting a first component (e.g., the minus component), the processor 200 may swap the plus component and the minus component.

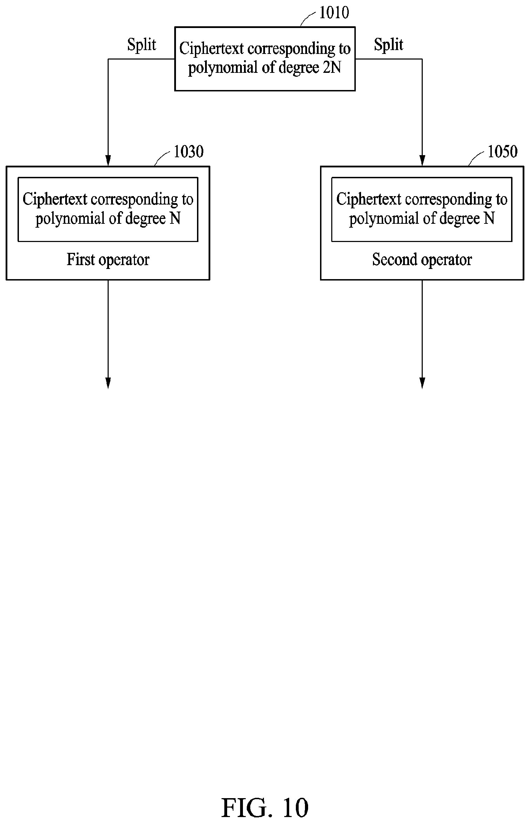

FIG. 10 illustrates an example of calculating split polynomials using a plurality of operators, according to one or more embodiments.

A processor (e.g., the processor 200 of FIG. 1) may generate split polynomials having a second degree by factorizing a polynomial, thereby reducing a first degree of the received polynomial to the lower second degree of the split polynomials.

The processor 200 may allocate, to a first operator, a ciphertext corresponding to a first polynomial (one of the split polynomials). The processor 200 may allocate, to a second operator, a ciphertext corresponding to a second polynomial (another of the split polynomials). The first operator and the second operator may be implemented as an accelerator.

The processor 200 may generate the split polynomials by recursively splitting the received polynomial based on a threshold degree, which may correspond, for example, to a maximum degree of a polynomial operable by the first operator and the second operator (the threshold degree may also be a changeable setting). The processor 200 may recursively split the polynomial until a degree of the split polynomials becomes smaller than the threshold degree.

In the example of FIG. 10, the processor 200 may receive a ciphertext corresponding to a polynomial having a degree of 2N and split the polynomial in step 1010. The processor 200 may generate one ciphertext corresponding to a polynomial having a degree of N and allocate it to the first operator in step 1030. The processor 200 may generate another ciphertext corresponding to a polynomial having the degree of N and allocate it to the second operator in step 1050. In some embodiments, the first and second operator may perform the same type of operation.

When a polynomial degree required by an application is initially already N, the processor 200 in a device having homomorphic encryption operators supporting the polynomial degree N (or less) in parallel may nonetheless split the polynomial of the degree N into polynomials of a degree less than N, and thereby may process the split polynomials in parallel.

The processor 200 may process the split polynomials in parallel and then join the processed split polynomials to process the entire polynomial of the degree N. This may increase the performance of a homomorphic encryption operation by the number of parallel operators (e.g., by a multiple of 2).

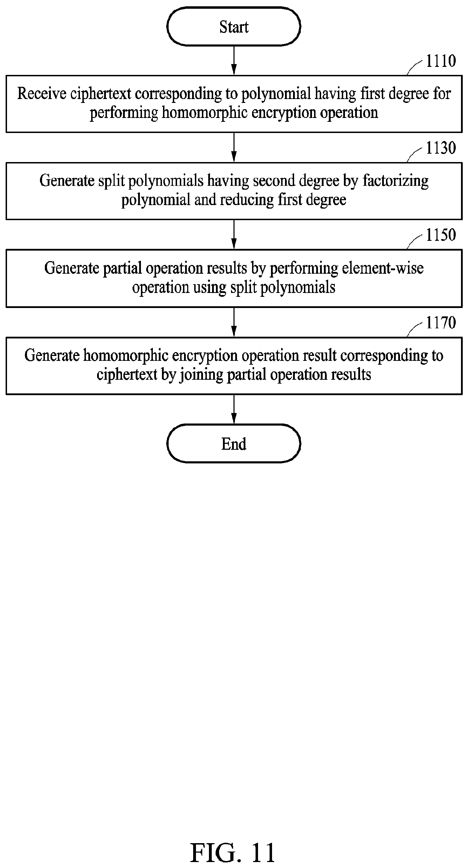

FIG. 11 is a flowchart illustrating an example of a homomorphic encryption operation method performed by the homomorphic encryption operation apparatus of FIG. 1, according to one or more embodiments.

In step 1110, a receiver (e.g., the receiver 100 of FIG. 1) may receive a ciphertext in the form of a polynomial. The ciphertext polynomial may have a first degree and may be a target for performing a homomorphic encryption operation.

In step 1130, a processor (e.g., the processor 200 of FIG. 1) may generate split polynomials, each having a second degree less than the first degree, by factorizing the received/target polynomial.

The processor 200 may allocate, to a first operator, a first ciphertext corresponding to the first polynomial (among the split polynomials). The processor 200 may allocate, to a second operator, a second ciphertext corresponding to the second polynomial (among the split polynomials).

The processor 200 may generate the split polynomials by recursively splitting the received/target polynomial based on a threshold degree of a polynomial operable by the first operator and the second operator. The processor 200 may recursively split the polynomial until a degree of the split polynomials becomes smaller than the threshold degree.

The processor 200 may determine a second twiddle factor corresponding to the second polynomial from among the split polynomials based on a first twiddle factor corresponding to the first polynomial among the split polynomials.

The processor 200 may determine the second twiddle factor by multiplying the first twiddle factor by a constant, i.e., the second twiddle factor may be a multiple of the first twiddle factor.

The processor 200 may perform an NTT on the first polynomial and the second polynomial based on the first twiddle factor and the second twiddle factor.

A coefficient modulus of the split polynomials may have a 4N-th root of unity, in which N may correspond to the second degree, which is the degree of the split polynomial.

The processor 200 may generate partial operation results by performing an element-wise operation using the split polynomials in step 1150; element-wise operations on respective split polynomials may generate partial operation results for the respective split polynomials (here, element-wise refers to elements of a polynomial, e.g., operations on elements of a vector representing a split polynomial).

The processor 200 may generate a homomorphic encryption operation result for the ciphertext by joining the partial operation results in step 1170. The processor 200 may join the partial operation results by adding or subtracting a coefficient of the first polynomial among the split polynomials and a corresponding coefficient of the second polynomial among the split polynomials (e.g., a vector addition or subtraction may be performed).

In some embodiments, according to a homomorphic polynomial encryption scheme, a client device may convert any general message (e.g., any user data) to a plaintext and may encrypt the plaintext as an original polynomial ciphertext. The homomorphic encryption operation apparatus 10 may be implemented as a hardware accelerator included in a server device. The server device may be connected with a network. The server device may receive the original polynomial ciphertext via the network from the client device. The server device may determine a type of procedure that may involve transforming the original polynomial ciphertext. Accordingly, the server may use the hardware accelerator (e.g., an implementation of the homomorphic encryption operation apparatus 10) to transform the original polynomial ciphertext (e.g., using polynomial splitting, possibly recursively, performing a polynomial operation of the scheme on the split polynomial, joining the results thereof) to generate a corresponding transform of the original polynomial ciphertext. The transformed original ciphertext may be returned via the network to the client. The client may further apply the homomorphic encryption scheme to the transformed original ciphertext to produce a result equivalent to performing the transform on the original message.

The computing apparatuses, the electronic devices, the processors, the memories, the storage devices, and other apparatuses, devices, units, modules, and components described herein with respect to FIGS. 1-11 are implemented by, or representative, of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-11 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure is defined by the enclosed claims.

## Claims

1. An apparatus (10), comprising:
a processor (200) configured to, and/or coupled with a memory (300) storing instructions to configure the processor (200) to:
generate (1130), from a ciphertext corresponding to a polynomial having a first degree for performing a homomorphic encryption operation, split polynomials having a second degree by factorizing the polynomial, wherein the split polynomials have a second degree that is less than the first degree and allocate, to a first operator, a first polynomial (210) among the split polynomials and allocate to a second operator, a second polynomial (230, 250) among the split polynomials, wherein the split polynomials are generated by recursively splitting the polynomial based on a threshold degree of a polynomial operable by the first operator and the second operator until a degree of the split polynomials becomes smaller than the threshold degree;
generate (1150) partial operation results by performing an element-wise operation using the split polynomials; and
generate (1170) a homomorphic encryption operation result corresponding to the ciphertext by joining the partial operation results.

2. The apparatus (10) of claim 1, wherein a coefficient modulus of the split polynomials has a 4N-th root of unity, and wherein N corresponds to the second degree.

3. The apparatus (10) of claim 1 or 2, wherein the processor (200) is further configured to, and/or the instructions are to further configure the processor (200) to:
determine a second twiddle factor corresponding to a second polynomial (230, 250) among the split polynomials based on a first twiddle factor corresponding to a first polynomial (210) among the split polynomials.

4. The apparatus (10) of claim 3, wherein the processor (200) is further configured to, and/or the instructions are to further configure the processor (200) to perform one of:
determining the second twiddle factor by multiplying the first twiddle factor by a constant, and
performing a number-theoretic transformation, NTT, on the first polynomial and the second polynomial based on the first twiddle factor and the second twiddle factor.

5. The apparatus (10) of one of claims 1 to 4, wherein the processor (200) is further configured to, and/or the instructions are to further configure the processor (200) to:
join the partial operation results by adding or subtracting a coefficient of a first polynomial (210) among the split polynomials and a coefficient of a second polynomial (230, 250) among the split polynomials.

6. A method performed by a computing apparatus (10), the method comprising:
generating (1130) a plurality of split polynomials having a second degree by factorizing a polynomial having a first degree, wherein the polynomial is a ciphertext having a first degree and is for performing a homomorphic encryption operation and allocating, to a first operator, a first polynomial (210) among the split polynomials and allocating to a second operator, a second polynomial (230, 250) among the split polynomials, wherein the generating of the split polynomials comprises generating the split polynomials by recursively splitting the polynomial based on a threshold degree of a polynomial operable by the first operator and the second operator until a degree of the split polynomials becomes smaller than the threshold degree;
generating (1150) partial operation results by performing an element-wise operation using the split polynomials; and
generating (1170) a homomorphic encryption operation result corresponding to the ciphertext by joining the partial operation results.

7. The method of claim 6, wherein a coefficient modulus of the split polynomials has a 4N-th root of unity, and wherein N corresponds to the second degree.

8. The method of claim 6 or 7, further comprising:
determining a second twiddle factor corresponding to a second polynomial (230, 250) among the split polynomials based on a first twiddle factor corresponding to a first polynomial (210) among the split polynomials.

9. The method of claim 8, wherein the determining of the second twiddle factor comprises determining the second twiddle factor by multiplying the first twiddle factor by a constant, or
the method further comprises performing a number-theoretic transformation, NTT, on the first polynomial (210) and the second polynomial (230, 250) based on the first twiddle factor and the second twiddle factor.

10. The method one of claims 6 to 9, wherein the generating of the homomorphic encryption operation result (1170) comprises:
joining the partial operation results by adding or subtracting a coefficient of a first polynomial (210) among the split polynomials and a coefficient of a second polynomial (230, 250) among the split polynomials.

11. A non-transitory computer-readable storage medium storing instructions that, when executed by a processor (200), cause the processor (200) to perform the method steps of any of claims 6 to 10.

## Patentansprüche

1. Vorrichtung (10), umfassend:
einen Prozessor (200), der dazu eingerichtet ist und/oder mit einem Speicher (300) gekoppelt ist, der Anweisungen speichert, um den Prozessor (200) dazu einzurichten:
aus einem Chiffretext, der einem Polynom mit einem ersten Grad zum Durchführen einer homomorphen Verschlüsselungsoperation entspricht, durch Faktorisieren des Polynoms aufgeteilte Polynome mit einem zweiten Grad zu erzeugen (1130), wobei die aufgeteilten Polynome einen zweiten Grad aufweisen, der kleiner als der erste Grad ist, und einem ersten Operator ein erstes Polynom (210) unter den aufgeteilten Polynomen zuzuordnen und einem zweiten Operator ein zweites Polynom (230, 250) unter den aufgeteilten Polynomen zuzuordnen, wobei die aufgeteilten Polynome durch rekursives Aufteilen des Polynoms basierend auf einem Schwellengrad eines durch den ersten Operator und den zweiten Operator verarbeitbaren Polynoms erzeugt werden, bis ein Grad der aufgeteilten Polynome kleiner als der Schwellengrad wird;
Teiloperationsergebnisse durch Durchführen einer elementweisen Operation unter Verwendung der aufgeteilten Polynome zu erzeugen (1150); und
ein dem Chiffretext entsprechendes Ergebnis einer homomorphen Verschlüsselungsoperation durch Zusammenführen der Teiloperationsergebnisse zu erzeugen (1170).

2. Vorrichtung (10) nach Anspruch 1, wobei ein Koeffizientenmodulus der aufgeteilten Polynome eine 4N-te Einheitswurzel aufweist und wobei N dem zweiten Grad entspricht.

3. Vorrichtung (10) nach Anspruch 1 oder 2, wobei der Prozessor (200) ferner dazu einzurichten:
einen zweiten Twiddle-Faktor, der einem zweiten Polynom (230, 250) unter den aufgeteilten Polynomen entspricht, basierend auf einem ersten Twiddle-Faktor, der einem ersten Polynom (210) unter den aufgeteilten Polynomen entspricht, zu bestimmen.

4. Vorrichtung (10) nach Anspruch 3, wobei der Prozessor (200) ferner dazu eingerichtet ist und/oder die Anweisungen ferner dazu dienen, den Prozessor (200) dazu einzurichten, eines der Folgenden auszuführen:
Bestimmen des zweiten Twiddle-Faktors durch Multiplizieren des ersten Twiddle-Faktors mit einer Konstanten, und
Durchführen einer zahlentheoretischen Transformation, NTT, an dem ersten Polynom und dem zweiten Polynom basierend auf dem ersten Twiddle-Faktor und dem zweiten Twiddle-Faktor.

5. Vorrichtung (10) nach einem der Ansprüche 1 bis 4, wobei der Prozessor (200) ferner dazu eingerichtet ist und/oder die Anweisungen ferner dazu dienen, den Prozessor (200) dazu einzurichten:
die Teiloperationsergebnisse durch Addieren oder Subtrahieren eines Koeffizienten eines ersten Polynoms (210) unter den aufgeteilten Polynomen und eines Koeffizienten eines zweiten Polynoms (230, 250) unter den aufgeteilten Polynomen zusammenzuführen.

6. Von einer Rechenvorrichtung (10) ausgeführtes Verfahren, wobei das Verfahren umfasst:
Erzeugen (1130) mehrerer aufgeteilter Polynome mit einem zweiten Grad durch Faktorisieren eines Polynoms mit einem ersten Grad, wobei das Polynom ein Chiffretext mit einem ersten Grad ist und zum Durchführen einer homomorphen Verschlüsselungsoperation dient, und Zuordnen eines ersten Polynoms (210) unter den aufgeteilten Polynomen zu einem ersten Operator und Zuordnen eines zweiten Polynoms (230, 250) unter den aufgeteilten Polynomen zu einem zweiten Operator, wobei das Erzeugen der aufgeteilten Polynome das Erzeugen der aufgeteilten Polynome durch rekursives Aufteilen des Polynoms basierend auf einem Schwellengrad eines durch den ersten Operator und den zweiten Operator verarbeitbaren Polynoms umfasst, bis ein Grad der aufgeteilten Polynome kleiner als der Schwellengrad wird;
Erzeugen (1150) von Teiloperationsergebnissen durch Durchführen einer elementweisen Operation unter Verwendung der aufgeteilten Polynome; und
Erzeugen (1170) eines dem Chiffretext entsprechenden Ergebnisses einer homomorphen Verschlüsselungsoperation durch Zusammenführen der Teiloperationsergebnisse.

7. Verfahren nach Anspruch 6, wobei ein Koeffizientenmodulus der aufgeteilten Polynome eine 4N-te Einheitswurzel aufweist und wobei N dem zweiten Grad entspricht.

8. Verfahren nach Anspruch 6 oder 7, ferner umfassend:
Bestimmen eines zweiten Twiddle-Faktors, der einem zweiten Polynom (230, 250) unter den aufgeteilten Polynomen entspricht, basierend auf einem ersten Twiddle-Faktor, der einem ersten Polynom (210) unter den aufgeteilten Polynomen entspricht.

9. Verfahren nach Anspruch 8, wobei das Bestimmen des zweiten Twiddle-Faktors umfasst
Bestimmen des zweiten Twiddle-Faktors durch Multiplizieren des ersten Twiddle-Faktors mit einer Konstanten,
oder
das Verfahren ferner das Durchführen einer zahlentheoretischen Transformation, NTT, an dem ersten Polynom (210) und dem zweiten Polynom (230, 250) basierend auf dem ersten Twiddle-Faktor und dem zweiten Twiddle-Faktor umfasst.

10. Verfahren einem der Ansprüche 6 bis 9, wobei das Erzeugen des Ergebnisses der homomorphen Verschlüsselungsoperation (1170) umfasst:
Zusammenführen der Teiloperationsergebnisse durch Addieren oder Subtrahieren eines Koeffizienten eines ersten Polynoms (210) unter den aufgeteilten Polynomen und eines Koeffizienten eines zweiten Polynoms (230, 250) unter den aufgeteilten Polynomen.

11. Nichttransitorisches computerlesbares Speichermedium, das Anweisungen speichert, die bei Ausführung durch einen Prozessor (200) den Prozessor (200) dazu veranlassen, die Verfahrensschritte nach einem der Ansprüche 6 bis 10 auszuführen.

## Revendications

1. Appareil (10), comprenant :
un processeur (200) configuré pour, et/ou couplé à une mémoire (300) stockant des instructions pour configurer le processeur (200) pour :
générer (1130), à partir d'un texte chiffré correspondant à un polynôme ayant un premier degré pour effectuer une opération de chiffrement homomorphe, des polynômes scindés ayant un second degré par factorisation du polynôme, les polynômes scindés ayant un second degré inférieur au premier degré, et allouer, à un premier opérateur, un premier polynôme (210) parmi les polynômes scindés et allouer, à un second opérateur, un second polynôme (230, 250) parmi les polynômes scindés, les polynômes scindés étant générés par division récursive du polynôme sur la base d'un degré seuil d'un polynôme pouvant être traité par le premier opérateur et le second opérateur jusqu'à ce qu'un degré des polynômes scindés devienne inférieur au degré seuil ;
générer (1150) des résultats d'opération partielle en effectuant une opération élément par élément à l'aide des polynômes scindés ; et
générer (1170) un résultat d'opération de chiffrement homomorphe correspondant au texte chiffré en réunissant les résultats d'opération partielle.

2. Appareil (10) selon la revendication 1, dans lequel un module des coefficients des polynômes scindés possède une racine 4N-ième de l'unité, et dans lequel N correspond au second degré.

3. Appareil (10) selon la revendication 1 ou 2, dans lequel le processeur (200) est en outre configuré pour, et/ou les instructions sont destinées à configurer en outre le processeur (200) pour :
déterminer un second facteur de rotation correspondant à un second polynôme (230, 250) parmi les polynômes scindés sur la base d'un premier facteur de rotation correspondant à un premier polynôme (210) parmi les polynômes scindés.

4. Appareil (10) selon la revendication 3, dans lequel le processeur (200) est en outre configuré pour, et/ou les instructions sont destinées à configurer en outre le processeur (200) pour effectuer l'une des opérations suivantes :
déterminer le second facteur de rotation en multipliant le premier facteur de rotation par une constante,
et
effectuer une transformation théorique des nombres, NTT, sur le premier polynôme et le second polynôme sur la base du premier facteur de rotation et du second facteur de rotation.

5. Appareil (10) selon l'une des revendications 1 à 4, dans lequel le processeur (200) est en outre configuré pour, et/ou les instructions sont destinées à configurer en outre le processeur (200) pour :
réunir les résultats d'opération partielle en ajoutant ou en soustrayant un coefficient d'un premier polynôme (210) parmi les polynômes scindés et un coefficient d'un second polynôme (230, 250) parmi les polynômes scindés.

6. Procédé exécuté par un appareil de calcul (10), le procédé comprenant :
la génération (1130) d'une pluralité de polynômes scindés ayant un second degré par factorisation d'un polynôme ayant un premier degré, le polynôme étant un texte chiffré ayant un premier degré et étant destiné à effectuer une opération de chiffrement homomorphe, et l'allocation, à un premier opérateur, d'un premier polynôme (210) parmi les polynômes scindés et l'allocation, à un second opérateur, d'un second polynôme (230, 250) parmi les polynômes scindés, la génération des polynômes scindés comprenant la génération des polynômes scindés par division récursive du polynôme sur la base d'un degré seuil d'un polynôme pouvant être traité par le premier opérateur et le second opérateur jusqu'à ce qu'un degré des polynômes scindés devienne inférieur au degré seuil ;
la génération (1150) de résultats d'opération partielle en effectuant une opération élément par élément à l'aide des polynômes scindés ; et
la génération (1170) d'un résultat d'opération de chiffrement homomorphe correspondant au texte chiffré en réunissant les résultats d'opération partielle.

7. Procédé selon la revendication 6, dans lequel un module des coefficients des polynômes scindés possède une racine 4N-ième de l'unité, et dans lequel N correspond au second degré.

8. Procédé selon la revendication 6 ou 7, comprenant en outre :
la détermination d'un second facteur de rotation correspondant à un second polynôme (230, 250) parmi les polynômes scindés sur la base d'un premier facteur de rotation correspondant à un premier polynôme (210) parmi les polynômes scindés.

9. Procédé selon la revendication 8, dans lequel la détermination du second facteur de rotation comprend
la détermination du second facteur de rotation en multipliant le premier facteur de rotation par une constante,
ou
le procédé comprend en outre l'exécution d'une transformation théorique des nombres, NTT, sur le premier polynôme (210) et le second polynôme (230, 250) sur la base du premier facteur de rotation et du second facteur de rotation.

10. Procédé l'une des revendications 6 à 9, dans lequel la génération du résultat d'opération de chiffrement homomorphe (1170) comprend :
la réunion des résultats d'opération partielle en ajoutant ou en soustrayant un coefficient d'un premier polynôme (210) parmi les polynômes scindés et un coefficient d'un second polynôme (230, 250) parmi les polynômes scindés.

11. Support de stockage non transitoire lisible par ordinateur stockant des instructions qui, lorsqu'elles sont exécutées par un processeur (200), amènent le processeur (200) à exécuter les étapes du procédé de l'une quelconque des revendications 6 à 10.
